# EUROPEAN PATENT SPECIFICATION

(11) **EP 4 475 795 B1**
(45) Date of publication and mention of the grant of the patent: **01.04.2026**
(21) Application number: 23709838.9
(22) Date of filing: 07.02.2023
(51) Int. Cl.: A61C 17/20

(54) **CORDLESS BATTERY POWERED HANDHELD ULTRASONIC DENTAL SCALING SYSTEM**
TRAGBARES DENTALES ULTRASCHALL-SCALERSYSTEM MIT KABELLOSEM BATTERIEBETRIEB
SYSTÈME DE DÉTARTRAGE À ULTRASONS PORTATIF ALIMENTÉ PAR BATTERIE SANS FIL

(30) Priority: 07.02.2022 US 202263307418 P
(43) Date of publication of application: 18.12.2024
(73) Proprietor: Paschke Ultrasonix LLC, Missoula, Montana 59803 (US)
(72) Inventor: PASCHKE, Richard H., Missoula, Montana 59803 (US); BRIGHT, Charles B., Ames, Iowa 50010 (US); PASCHKE, Noel S., Missoula, Montana 59803 (US)
(74) Representative: Freischem & Partner Patentanwälte mbB
(86) International application number: PCT/US2023/012507
(87) International publication number: WO 2023/150383

(56) References cited:
- US-A1- 2007 166 663
- US-A1- 2013 071 812
- US-B1- 6 619 957

## Description

### BACKGROUND

### Technical Field

The present disclosure relates to dental scalers and, more specifically, to a cordless, battery powered, handheld ultrasonic dental scaling system including on-board fluid delivery.

### Background of Related Art

Current ultrasonic dental scalers are limited by their need to be tethered to a control module that supplies electrical power to the transducer in the handpiece to enable generation of ultrasonic vibrational energy. In addition, while improvements to electronic control systems for ultrasonic dental scalers have increased efficiency, such improvements typically increase power requirements and/or increase complexity, thereby increasing manufacturing costs.

Current ultrasonic dental scalers are also limited by their need to be tethered to the control module to enable the supply of coolant to the tooth-working tool interface and, in some cases, to the transducer in the handpiece. Further, such ultrasonic dental scalers are limited by the large amount of coolant required for dental treatment. For example, with respect to current ultrasonic dental scalers, a coolant flow rate of approximately 10 milliliters per minute to the tooth-working tool interface is required when utilizing ultrasonic energy in a low power setting. Thus, for a treatment lasting 20 minutes, with an average ultrasonics on time of 10 minutes, a minimum volume of 100 milliliters of coolant is required. Treatments requiring higher power levels could require at least 200 milliliters of coolant. This 200 milliliters of coolant (e.g., water) weighs 200 grams (g), or about 7 oz.

Tethered control modules remain necessary for current ultrasonic dental scalers at least because the size and weight of the electronics, controls, power source, and coolant (e.g., water) renders incorporating all of these components into the handpiece weight-prohibitive. For example, the handpieces of current ultrasonic dental scalers range from about 56.5 g (2 oz) for piezo scalers to about 72.2 g (2.5 oz) for magneto scalers. Adding the coolant weight alone (without consideration of the coolant container, electronics, and power source) would more than triple the weight of the handpiece. Including a power source, for example, a battery, would increase the weight about another 135 g and adding the electronics would add about another 300g. The result is a handpiece weighing approximately 830 g (1.8 pounds).

Further still, the adjustment of coolant flow is a challenge in current ultrasonic scaling systems. There is no standardization of coolant flow adjustment, which contributes to confusion in the field. Many current designs do not allow for precise flow rate control. In addition, systems without coolant regulators are also subject to flow rate variations due to input coolant pressure changes.

U.S. Patent Nos. 7,255,290; 8,113,179; 8,418,676; 8,683,982; and 9,385,300, for example, disclose an alloy that provides a durable electromechanical / mechatronic actuator with high mechanical power density. Terbium (element number 65 on the periodic chart) inseparably couples magnetic with mechanical effects. This unusual phenomenon, called magnetostriction, is indestructible; it cannot be permanently degraded because it originates from quantum mechanics within the terbium atom itself. Terbium is combined with dysprosium (element number 66) and iron to package this effect into a useful alloy dubbed Terfenol-D. Terfenol-D is among the best-known couplers of magnetic input to mechanical output.

In general, magnetostrictive materials convert a magnetic input to a mechanical output and vice versa. With respect to an actuator that converts magnetic input to mechanical output, a solenoid coil surrounds the magnetostrictive Terfenol-D element. Electrical input energizes the solenoid coil to create a magnetic field. The magnetostrictive Terfenol-D element converts that magnetic input to a mechanical output. The mechanical expansion of Terfenol-D is a nearly linear scale of the strength of the applied magnetic field. Reduction in field strength reduces expansion. In addition, the time rate at which the Terfenol-D expands or contracts is a nearly linear scale of the time rate of change of that applied magnetic field. Thus, Terfenol-D provides continuous control over mechanical output. Within the operating range of a single actuator, it enables both fast and small mechanical outputs as well as slow and large mechanical outputs and anything in between as desired by continuously controlling its electrical input.

In addition to continuous control, the quantum mechanical origin of its magnetostrictive effect endows Terfenol-D with the inherent durability to survive demanding environments. Magnetostriction has not been observed to fatigue Terfenol-D and high temperatures do not permanently degrade it. Since the energizing solenoid coil surrounds the magnetostrictive Terfenol-D element of an actuator but does not contact it, the magnetic field is applied without direct contact, avoiding fatigue of any component.

It is known in the art that piezoelectric ceramics have replaced nickel alloys for many electromechanical transducers. Further still, it is known that the energy density of piezo exceeds that of nickel alloys, and piezo transducers provide an output power to weight ratio greater than nickel alloys, for example Permanickel. In contrast, Terfenol-D offers the most energy density available for an electromechanical transducer, enabling smaller devices to offer the same mechanical output.

Table 1 in U.S. Patent No. 7,255,290 highlights Navy test data comparing piezo to GMM, or the giant magnetostrictive material known as Terfenol-D. The data shows that the energy coupling is comparable to piezo, but the data illustrates that the stress-limited energy density is different by almost a factor of three. This is a consequence of the differences in Young's moduli being almost a factor of three. In addition to this, Terfenol-D can safely operate at much higher preload bias than the relatively low -41 MPa shown in the table, without life-limiting issues such as fatigue occurring, raising its possible energy density even further. Furthermore, an excessive magnetic field simply saturates Terfenol-D expansion, whereas the piezo may suffer dielectric strength breakdown when subject to excess in an electrical field.

An ultrasonic scaler using Terfenol-D is described in US Patent No. 6,619,957, as a handheld scaler; however, all versions of the device are tethered handpieces, thereby limiting its portability.

US 2007/0166663 A1 discloses a cordless ultrasonic scaler which includes a cleaning tip, an actuator, power supply, control circuitry, a water reservoir and a pumping mechanism within the hand piece. A piezoelectric stack actuator drives both the cleaning tip and pumping mechanism. The reservoir in the hand piece supplies liquid to the pump for cooling the actuator, the cleaning tip and the teeth being cleaned. The reservoir defines a battery compartment. A pair of electrodes enable recharging the battery in a docking station when the device is not in use. Controls are provided for the actuator and fluid flow. Said ultrasonic scaler can be interpreted as a device disclosing the features of the preamble of claim 1.

US 2013/0071812 A1 refers to an ultrasonic instrument including a tip portion, a transducer configured to convert electrical energy into vibrational energy, an acoustic transformer interconnecting the transducer and the tip portion, and a grip portion disposed at least partially about the acoustic transformer. The grip portion is coupled to the acoustic transformer via a resilient nodal coupling at a nodal region of the acoustic transformer. The resilient nodal coupling is configured to provide rotational and axial stability to the acoustic transformer. The disclosed ultrasonic instrument can be regarded as an ultrasonic acoustic assembly including a rotatable grip coupled to the acoustic transformer at a nodal area of the acoustic transformer, the rotatable grip configured to rotate the ultrasonic acoustic assembly relative to the enclosure.

### SUMMARY

The terms "about," substantially," and the like, as utilized herein, are meant to account for manufacturing, material, environmental, use, measurement, and/or other tolerances and variations, up to and including plus or minus 10%. In addition, the terms "amplitude" and "stroke" are utilized interchangeably with reference to output levels of a device. The terms "angular and rotational" are also utilized interchangeably herein with reference to compression of the transducer during assembly.

The invention relates to a cordless ultrasonic dental scaler system in accordance with claim 1. Further embodiments are defined in dependent claims 2 to 15.

Another object of this disclosure is to provide an ultrasonic scaling device that provides a detachably removable (and, in aspects, renewable) power source, an integral (and, in aspects, self-regulating) fluid delivery system, and a detachably removable electronic control system (e.g., electronic drive circuitry).

Yet another object of this disclosure is to provide anti-rotational component(s) in the acoustic assembly (e.g., of an ultrasonic scaling device), thereby increasing mechanical integrity, especially during the compression of the transducer of the acoustic assembly.

Other objects, aspects, and features of the present disclosure will become apparent from the descriptions herein as well as from the accompanying drawings.

Provided in accordance with aspects of the present disclosure is a cordless ultrasonic dental scaler system including an enclosure configured to be handheld and an ultrasonic acoustic assembly disposed at least partially within the enclosure. The ultrasonic acoustic assembly is configured to produce a vibrational wave (e.g., with an amplitude component between 0.2 and 5.0 mils (0.0508 mm and 0.127 mm)) and includes a transducer defining a fixed length extending between first and second ends of the transducer. The ultrasonic acoustic assembly further includes an acoustic transformer, (wherein, the length of the acoustic transformer determines, in part, the resonant frequency f₀). The acoustic transformer is connected to the transducer at a junction and extending therefrom, and a tip detachably connected to a distal end of the acoustic transformer. A rotatable grip is coupled to the acoustic transformer at a nodal area of the acoustic transformer and is configured to rotate the ultrasonic acoustic assembly relative to the enclosure. An electronic control system is disposed within the enclosure and configured to energize the ultrasonic acoustic assembly. A battery is disposed within the enclosure and configured to power the electronic control system. A fluid source is also disposed within the enclosure and contains a fluid. The fluid source has a metered flow rate of the fluid from the fluid source that is controlled by the electronic control system.

In an aspect of the present disclosure, the transducer is a Terfenol-D transducer.

In another aspect of the present disclosure, the transducer has an elastic modulus less than 50 GPa.

In another aspect of the present disclosure, the tip is detachably connected to the distal end of the acoustic transformer by threads.

In another aspect of the present disclosure, the rotatable grip has a rotational range of at least about 360 degrees relative to the enclosure.

In still another aspect of the present disclosure, a torque required to rotate the rotatable grip relative to the enclosure is less than about 10 in-ounces (0.0071 Newton-meters) and, in aspects, in a range of about 1 in-ounce (0.0706 Newton-meters) to about 5 in-ounces (0.0353 Newton meters).

In yet another aspect of the present disclosure, the battery is rechargeable.

In still yet another aspect of the present disclosure, the electronic control system and the battery are detachably removable from the enclosure.

In another aspect of the present disclosure, a first portion of the enclosure housing the electronic control system and the battery is detachable from a second portion of the enclosure.

In another aspect of the present disclosure, the fluid source is a removable pod which encloses the fluid, which may include a coolant (e.g., water), a sterile fluid, and/or a medicament.

According to the invention, the metered flow rate of the fluid from the fluid source is proportional to an output amplitude of the vibrational wave produced by the acoustic assembly. The proportionality may be linear or non-linear.

In yet another aspect of the present disclosure, a substantially uniform pressure is applied to the fluid contained within the fluid source. The pressure applied (in aspects, the substantially uniform pressure) may be, in aspects, in a range of about 2 psi (13789.5 Pa) to about 10 psi (68947.6 Pa) and, in aspects, in a range of about 3 psi (20684.3 Pa) to about 5 psi (34473.8 Pa).

In another aspect of the present disclosure, a spring is disposed within the enclosure and configured to apply a pressure to the fluid contained within the fluid source.

An ultrasonic acoustic assembly is provided in accordance with the present disclosure and configured for use with a cordless ultrasonic dental scaler system. The acoustic assembly is configured to produce a vibrational wave (e.g., with an amplitude component between 0.2 and 5.0 mils (0.0508 mm and 0.127 mm)) and includes a transducer, an acoustic transformer, and a keyed component. The transducer defines a fixed length extending between first and second ends of the transducer. The acoustic transformer is connected to the transducer at a junction and extends therefrom. A keyed component is provided with the transducer maintained under compression between the acoustic transformer and the keyed component. The keyed component and the acoustic transformer are configured to inhibit relative rotational motion of the transducer during the compression.

In an aspect of the present disclosure, an operational frequency of the acoustic assembly is in a range of about 18 kHz to 55 kHz or, in aspects in a range of about 20 kHz to 30 kHz.

In another aspect of the present disclosure, the keyed component prevents relative rotational (angular) motion of the transducer during the compression. Additionally, the acoustic transformer may be constrained in both angular and axial directions, e.g., at a nodal area of the acoustic assembly.

In an aspect of the present disclosure, the transducer is a Terfenol-D transducer.

The systems of the present disclosure are fully portable, thereby reducing cord-related clutter, hazards, and ergonomic issues for in-office use and broadening access to dental care such as, for example, for remote populations, patients unable to travel to a dental office or clinic for treatment, tele-dentistry applications, military applications, areas without clean water or reliable power, etc.

In aspects, any of the scaler systems of the present disclosure may include a remote, e.g., wireless, connection to control device to enable remote control of an on-off operation of the device, power output, and/or coolant flow rate.

In aspects, any of the scaler systems of the present disclosure may include a remote, e.g., voice control, connection to control device to enable remote control of an on-off operation of the device, power output, and/or coolant flow rate.

In aspects, any of the systems of the present disclosure may include a refillable or replaceable fluid chamber, e.g., in the form of a flexible packet, seated within a compartment. In such aspects, the component (or components therein) may be configured to control the flow of the fluid (e.g., by pressurizing or depressurizing the fluid chamber and/or opening/closing valving such as a solenoid). The flow may be controlled with a duty cycle between 0 and 75%. In these aspects the replaceable fluid packet may be seated within a compartment having a detachable cap that enables replacement of the fluid packet and provides a compressive force to the fluid packet to produce a pressure in the fluid packet. The cap may be attached via threading and/or the compressive force may establish a pressure within the fluid packet of from about 2 psi (13789.5 Pa) to about 10 psi (68947.6 Pa) or, in aspects, of from about 3 psi (20684.3 Pa) to about 5 psi (34473.8 Pa).

In aspects, any of the systems of the present disclosure may include electronic drive circuitry with substantially reduced complexity over prior art systems, thus facilitating use in a portable, battery-powered system. In particular, the drive circuitry eliminates the requirement to sample the drive voltage and current to select the optimum operating point. In such aspects, the power source is electrically connected to the transducer in a manner that produces vibrational energy when actuated, wherein an acoustical transformer interfaces with the transducer under prestress conditions and provides a coupling means for detachable dental tools. An electronic circuit controls the frequency and amplitude of the ultrasonic transducer, wherein a fixed, preselected frequency maintains user selectable output amplitude levels over a predetermined operating range.

In aspects, any of the systems of the present disclosure may provide fluid flow to the working tool and minimize the amount of fluid required by controlling the flow rate of the fluid under pressure. The flow rate may be determined by the level of tool amplitude during treatment. That is, the output flow rate may be controlled based upon the output amplitude (in aspects, the fluid flow is proportional to the amplitude). The controlling components can be locally mounted in the system or remotely mounted in an external controller. In either configuration, the total amount of fluid volume required during treatment is minimized without affecting the fluid efficiency, thereby providing a hands-free operation, and eliminating any error associated with the manual adjustment of flow.

In aspects, the transducer of any of the systems of the present disclosure may utilize a Terfenol-D transducer. An adjustment component(s) that stabilizes and minimizes any lateral or rotational movement of the Terfenol-D transducer during preload may be provided such that the Terfenol-D transducer is optimally compressed without fracture.

In aspects, the Terfenol-D transducer is preloaded between 100 and 20,000 psi (689476 Pa to 0.138 GPa). Additionally, or alternatively, the Terfenol-D transducer may define a resonant length. In aspect, the transducer is an nλ/4 transducer where n equals 1 or 2 and wherein the operational frequency is in the range of about 18 kHz to about 55 kHz or, in aspects, of about 20 kHz to about 30 kHz.

The transducer of any of the systems of the present disclosure may provide an output amplitude in the range of 0.2 to 5.0 mils (0.0508 mm to 0.127 mm), and in the absence of feedback and any magnetic biasing of the transducer.

Any of the systems of the present disclosure may further be configured to allow for up to 360-degree rotation (and, in some instances, unlimited rotation) of the instrument grip and tool to improve adaptation to tooth line angles. Such rotation may be provided at torques less than about 10 in-ounces (0.0071 Newton-meters) and/or in a range of 1 in-ounce (0.0706 Newton-meters) to 5 in-ounces (0.0353 Newton meters).

In additional or alternative aspects, the one or more batteries and electronics are supported within a power pack detachably connected to the handpiece. In such aspects, the battery(s) may be surrounded by the electronics (drive circuitry) to provide a compact configuration. Further, a solenoid to regulate the coolant flow rate may be disposed in the power pack as well, in aspects.

### BRIEF DESCRIPTION OF THE DRAWINGS

Various aspects and features of the present disclosure are described hereinbelow with reference to the drawings wherein:
FIG. 1 is an amplitude plot of an ultrasonic acoustic system in accordance with the present disclosure;
FIG. 2 is a graph illustrating an ultrasonic acoustic system profile of the ultrasonic acoustic system with a nodal pin in accordance with the present disclosure;
FIG. 3 is a stress graph of the ultrasonic acoustic system in accordance with the present disclosure;.
FIG. 4A is chart providing linear design parameters according to the boxed numerals in FIG. 2 for the ultrasonic acoustic system;
FIG. 4B is a chart providing design parameters and output data for the ultrasonic acoustic system;
FIG. 5 is a longitudinal, cross-sectional view of the ultrasonic acoustic system;
FIG. 6 is a longitudinal, cross-sectional view of a cordless ultrasonic dental scaler system in accordance with the present disclosure including the ultrasonic acoustic system, an fluid system, a battery, and an electronic control system; and
FIG. 7 is a block diagram of the cordless ultrasonic dental scaler system in accordance with the present disclosure.

### DETAILED DESCRIPTION

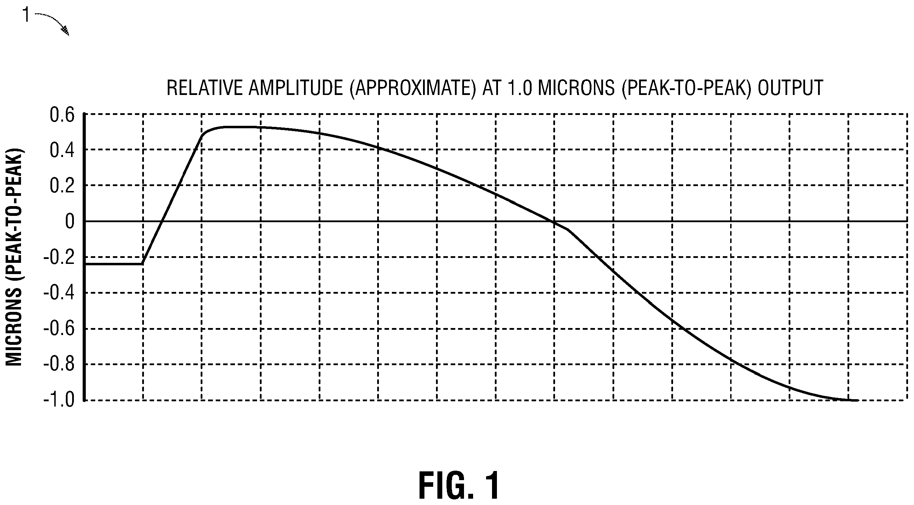

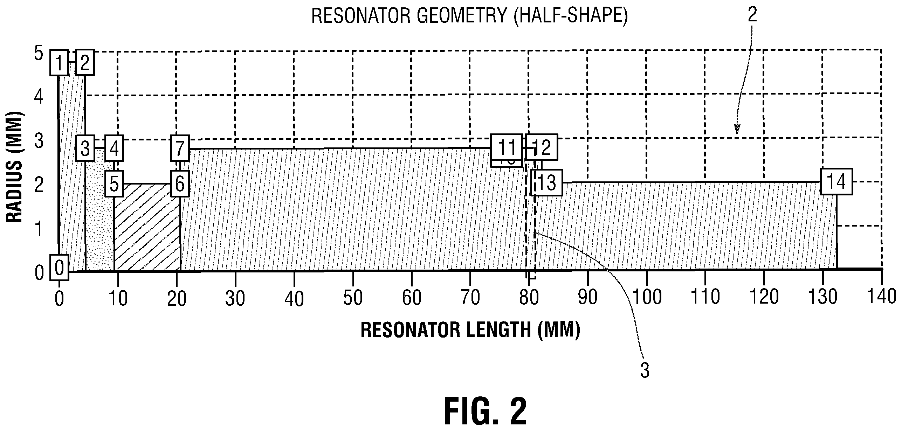

Turning to FIGS. 1 and 2, FIG. 1 illustrates a graph 1 of the output amplitude of an ultrasonic acoustic system or ultrasonic driver 2 (FIG. 2) in accordance with the present disclosure and FIG. 2 illustrates the ultrasonic driver 2 shown as a half shape using the assembly axis as the line of symmetry. The amplitude at the mesial end of the ultrasonic driver 2 is about 0.25 microns (0.25 µm) and the output amplitude at the distal end of the ultrasonic driver 2 is about 1.0 micron (1.0 µm). The output amplitude of the ultrasonic driver 2, shown in FIG. 2, represents an acoustic system configuration wherein the ultrasonic vibrational wave produced is primarily longitudinal.

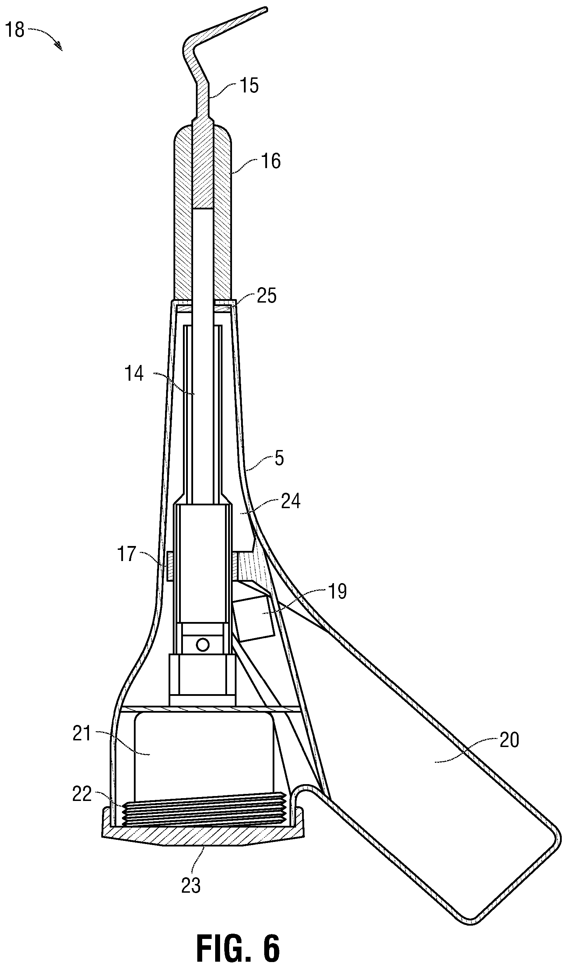

Continuing with reference to FIG. 2, the ultrasonic driver 2 is shown defining a full lambda λ configuration, wherein the system has two nodal areas. The second nodal area has a through hole 3, which enables attachment of the ultrasonic driver 2 to a grip 16 (FIG 6).

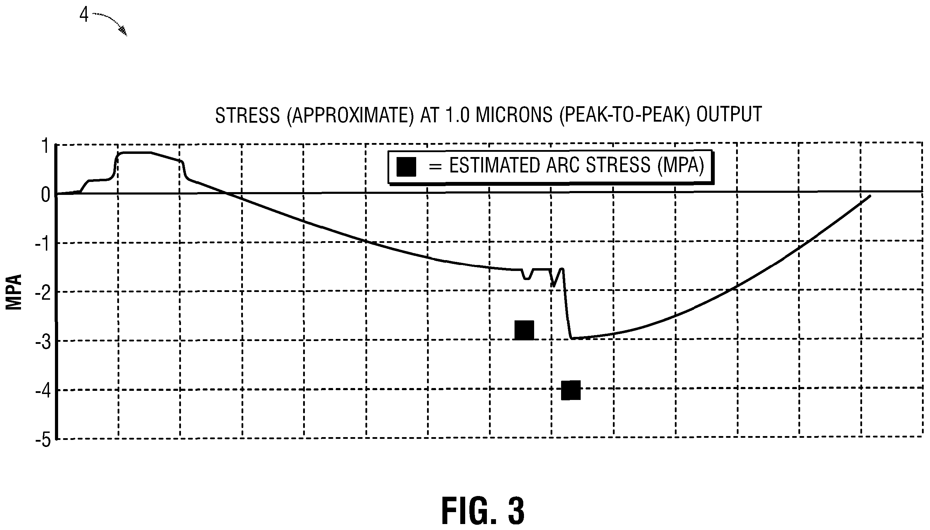

Referring to FIG. 3, a graph 4 illustrates the stress along the ultrasonic driver 2 (FIG. 2), where the sign of the stress value is determined by the position relative to the nodal areas along the assembly. For simplicity, the values are shown for an output amplitude of about 1.0 micron (1.0 µm). The actual value of stress can be estimated by multiplying the graph values by the actual magnitude of the output amplitude.

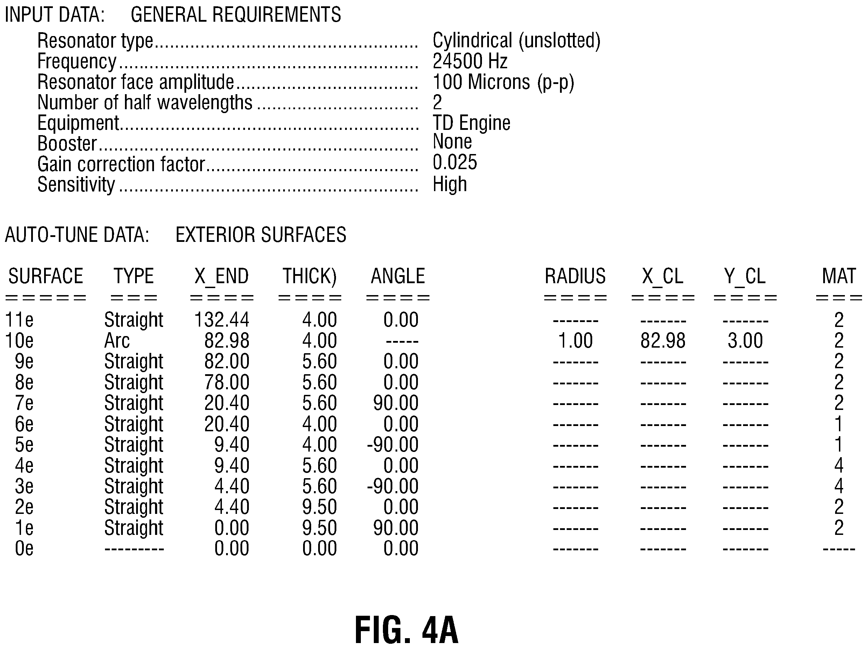

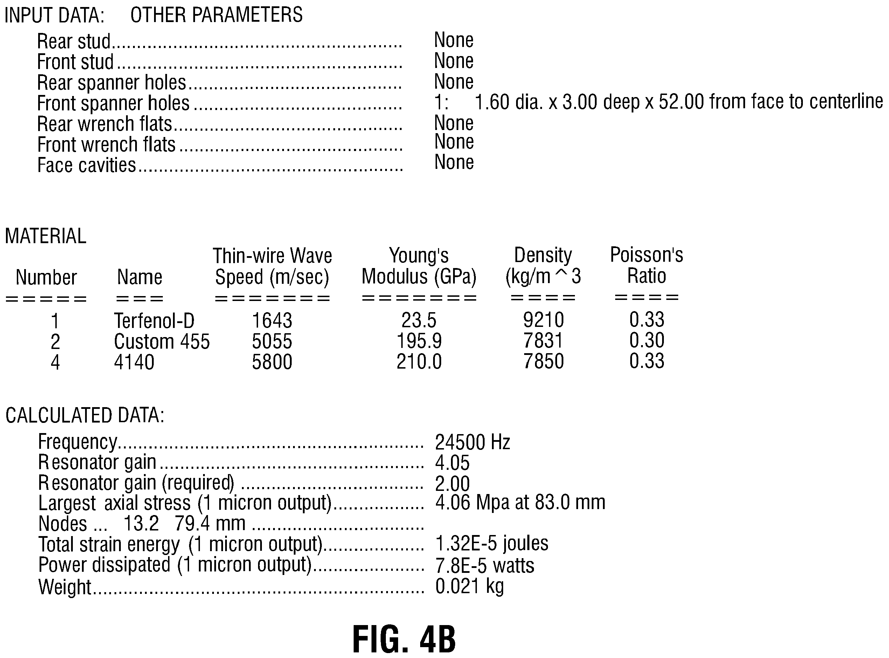

FIG. 4A illustrates exemplary design parameters of the ultrasonic driver 2 (FIG. 2) including the parameters of the various sections of the design, including, section length, diameter, and transitional radii wherein each of the boxed numerals in FIG. 2 correspond to the identified surfaces in the chart of FIG. 4A. The material ("MAT") for each section is also referenced in combination with the chart of FIG. 4B.

FIG. 4B, is a chart listing the design parameters of the materials noted in the chart of FIG. 4A, as well as the position, diameter, and depth of the nodal support hole, referred to as a front spanner hole, and the calculated output values. These values include operational frequency, resonator gain, and position and value of the largest stress in the ultrasonic driver 2 (FIG. 2).

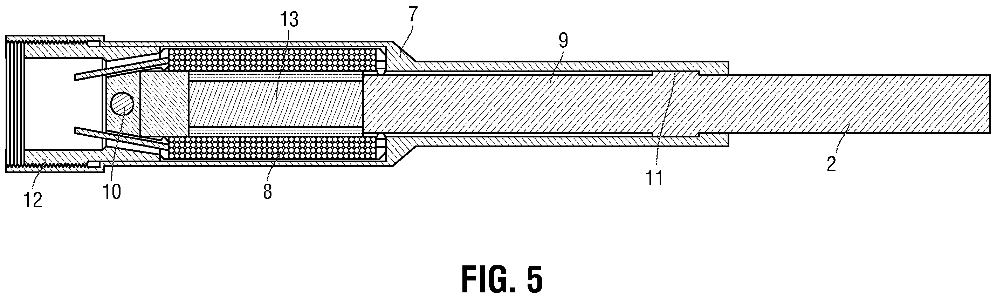

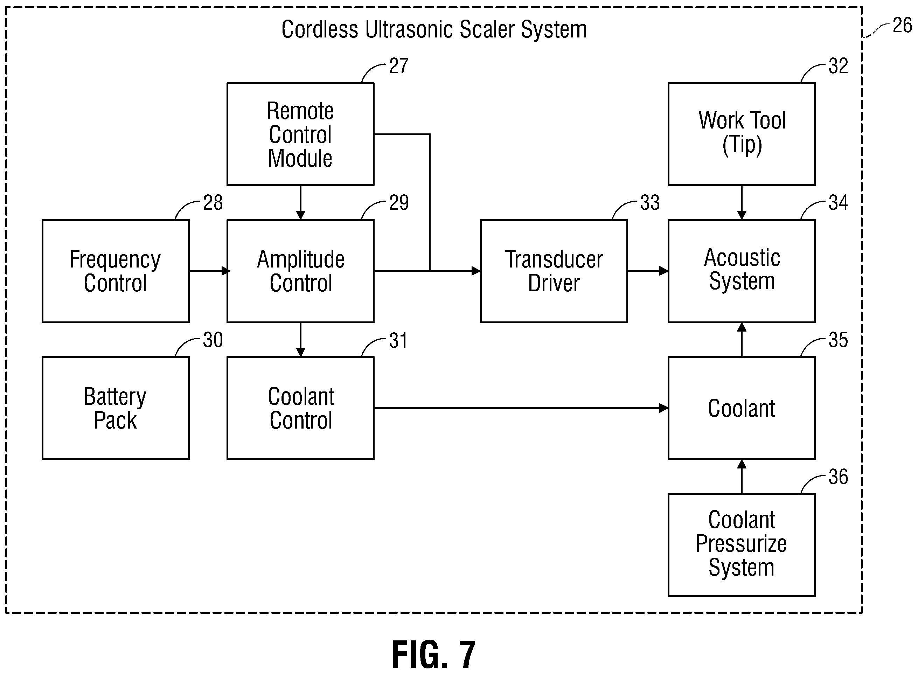

FIG. 5 illustrates the ultrasonic acoustic system or ultrasonic driver 2 mounted in a housing 7, wherein the transducer 13 is a Terfenol-D crystal transducer and is maintained under compression between an acoustic transformer 9 and an end mass 12. The transducer 13 includes a fixed length extending between first and second ends of the transducer 13. The acoustic transformer 9 is connected to the transducer 13 at a junction and extends therefrom. The acoustic transformer 9 is constrained (rotationally and, in aspects, axially) by a housing 7 at a nodal area 11, e.g., via engagement of complementary mechanical features of the acoustic transformer 9 and the housing 7. A keyed component 10 disposed between the load mass 12 and the transducer 13 restricts rotational (angular) movement of the transducer 13 during compression (at assembly), thereby reducing the risk of fracturing the transducer, e.g., the Terfenol-D crystal, and also restricts axial movement of the transducer 13. A coil 8 is disposed about the transducer 13, whereby a magnetic field is produced by a drive signal imparted to the coil 8 from an electronic control system, e.g., a transducer driver 33 (FIG. 7) of the electronic control system, resulting in the generation of vibrational waves along the ultrasonic driver 2 and a resultant output amplitude 1 (FIG. 1) at a working tool (e.g., tip 15 (FIG. 6)) of the ultrasonic driver 2. In this manner, the various components of the ultrasonic driver 2 are operably coupled and retained at least partially within the housing 7.

FIG. 6 illustrates a cordless, battery powered ultrasonic dental scaler system 18 in accordance with the present disclosure. The system 18 includes an enclosure 5 that is configured as a handheld enclosure defining any suitable configuration such as, for example, a barrel configuration, a pistol configuration (as shown), etc. The system 18 incorporates a fluid source (e.g., as part of an in-line cooling system) having a cap 23 in cooperation with a pressuring component 22, and a fluid chamber 21 (that, in aspects, is renewable or replaceable). The system 18 further includes an ultrasonic acoustic assembly or ultrasonic driver 14 (which may be similar to and include any or all of the features of the ultrasonic driver 2 (see FIGS. 1-5)), an electronics and battery compartment 20, a fluid flow control 19 (e.g., a solenoid), a rotatable grip 16 that may be rotatable, by means of a support 17, to rotate the ultrasonic driver 14 relative to the enclosure 5, and a working tool or tip 15 mounted to the ultrasonic driver 14 and extending from the rotatable grip 16. The tip 15 may be detachably connected to the acoustic transformer 9 (FIG. 5) of the ultrasonic driver 14, e.g., via threaded engagement. The electronics and battery compartment 20 (forming a portion of the enclosure 5, in aspects) may be removable from the enclosure 5 (or a different portion of the enclosure 5) and/or the electronics and battery (not shown in FIG. 6) may be removable from the compartment 20 to facilitate sterilization of the system 18. The rotatable grip 16 may be configured to rotate at a low torque to rotate the ultrasonic driver 14 relative to the enclosure 5 and may rotate through a range of motion of up to 360 degrees; in other aspects, unlimited rotation is permitted. The low torque may be less than about 10 in-ounces (0.0706 Newton-meters) and/or, in aspects, in a range of about 1 in-ounce (0.0071 Newton-meters) to about 5 in-ounces (0.0353 Newton-meters).

Continuing with reference to FIG. 6, the fluid flow control 19 (e.g., solenoid) is coupled to the fluid chamber 21 via a suitable fluid conduit (not shown), and to a reservoir 24 defined within the enclosure 5. The fluid flow control 19 is powered by the battery and controlled by the electronics 29 (FIG. 7) and is configured to meter the fluid flow rate from fluid chamber 21; that is, to enable the selective delivery of fluid from fluid chamber 21, into the reservoir 24, through the rotatable grip 16, and about the ultrasonic driver 14 for delivery therethrough to the working tool (e.g., tip 15) tooth interface and/or for cooling the ultrasonic driver 14. One or more seals 25 may be provided to define the reservoir 24 and/or direct the flow of fluid while inhibiting fluid from reaching sensitive components, for example, electronic components, batteries, transducer (Terfenol-D crystal), and/or leaking at the grip interface. The fluid chamber 21 is shown as a renewable packet or pod, however it is contemplated that it may alternately be in the form of a reservoir. In any of these or other aspects, the fluid, e.g., coolant, sterile fluid, medicament, etc., within the fluid chamber 21 is retained under pressure via a spring 22 (or other suitable pressuring component) which is held by the cap 23. The cap or pressurizing cap 23 may be removably engaged with the enclosure 5 of the system 18, for example, to enable replacement of the fluid chamber 21 (and/or the fluid therein), via a threaded engagement, and pressurization thereof upon reengagement of the cap 23. In aspects, the fluid chamber 21 may be configured to hold at least 50 ml of fluid and may be readily refilled or replaced with a new fluid chamber 21 (e.g., fluid pod or packet) as needed during a dental treatment.

Turning to FIG. 7, a simplified block diagram illustrating a system 26 of the functional components of the cordless, battery-powered, ultrasonic dental scaler system 18 (FIG. 6) is shown. The system 26 includes a frequency control circuit 28, which is coupled to an amplitude control circuit 29, which couples to a transducer driver circuit 33. The system 26 may further include a remote-control module 27 configured to communicate with one or more external controllers, for example, a wireless footswitch (not shown). It is contemplated that a voice-controlled module could be included that would use simple voice commands to control all functions, including on-off, output amplitude levels, mode selection when applicable, fluid controls, and other modes as understood by the art. A cable port (not shown) may also be provided for wired connection of an external controller. Hand controls, e.g., on the enclosure 5 (FIG. 6), are alternatively contemplated for some, or all of the features noted above.

In aspects, at least the frequency control circuit 28, the amplitude control circuit 29, and the transducer driver circuit 33 form an electronic control system, although other controls are also contemplated. The electronic control system may, additionally or alternative, include the remote-control module 27 and/or a fluid or coolant control circuit 31 (detailed below). A power source such as a battery or battery pack 30 is provided to power the electronic components, e.g., of the electronic control system. The one or more batteries of battery pack 30 (collectively as battery pack 30 or individually) may be rechargeable and/or replaceable.

The amplitude control circuit 29 is also connected to the fluid or coolant control circuit 31, which is configured to vary the fluid or coolant flow based on the output amplitude, thereby providing hands-free coolant flow rate control. The coolant control circuit 31 is connected to the coolant module 35 (e.g., the fluid chamber 21 (FIG. 6)), which controls the coolants on-off function, for example, by operating the solenoid 19 (see FIG. 6). The pressure system 36 pressurizes the coolant module 35 to a pressure or pressure range, for example, from about 2 to about 10 psi (68947.6 Pa) or, in other aspects, from about 3 psi (20684.3 Pa) to about 5 psi (34473.8 Pa), via an active pressurizing device associated with the pressurizing cap 23 (see FIG. 6) in addition or as an alternate to the spring 22 (FIG. 6). In aspects, the pressure or pressure range is predetermined and/or substantially uniform.

An ultrasonic acoustic system, ultrasonic driver, or acoustic system 34 (e.g., similarly as detailed hereinabove), receives signals from the transducer driver circuit 33 (powered by battery pack 30) and coolant from the coolant module 35 during ultrasonic operation. The system may also be configured to provide coolant both with and without ultrasonic operation, thereby enabling a flushing option. The acoustic system 34, in turn, produces a vibration wave amplitude at the work tool (tip) 32, which may be an ultrasonic dental scalar tip. The solenoid 19 or other suitable flow controller for metering the flow rate of fluid may do so at a rate proportional to the output amplitude of the vibrational wave at the work tool (tip) 32, wherein the proportionality may be linear or non-linear.

It will be understood that various modifications may be made to the aspects and features disclosed hereinabove. Therefore, the above description should not be construed as limiting but merely as exemplifications of various aspects and features.

## Claims

1. A cordless ultrasonic dental scaler system (18), the system comprising:
an enclosure (5) configured to be handheld;
an ultrasonic acoustic assembly (2) disposed at least partially within the enclosure (5), the ultrasonic acoustic assembly (2) configured to produce a vibrational wave and including:
a transducer (13) defining a fixed length extending between first and second ends of the transducer (13);
an acoustic transformer (9) connected to the transducer (13) at a junction and extending therefrom; and
a tip (15) detachably connected to a distal end of the acoustic transformer (9);
an electronic control system (26) disposed within the enclosure (5) and configured to energize the ultrasonic acoustic assembly (2);
a battery (30) disposed within the enclosure (5) and configured to power the electronic control system (26); and
a fluid source (21) disposed within the enclosure (5), the fluid source (21) containing a fluid and having a metered flow rate of the fluid from the fluid source (21), the metered flow rate controlled by the electronic control system (26), **characterized in that** the cordless ultrasonic dental scaler system (18) includes a rotatable grip (16) coupled to the acoustic transformer (9) at a nodal area of the acoustic transformer (9), the rotatable grip (16) configured to rotate the ultrasonic acoustic assembly (2) relative to the enclosure (5) and that the metered flow rate of the fluid from the fluid source (21) is proportional to an output amplitude of the vibrational wave produced by the ultrasonic acoustic assembly (2).

2. The cordless ultrasonic dental scaler system (18) according to claim 1, wherein the transducer (13) is a Terfenol-D transducer.

3. The cordless ultrasonic dental scaler system (18) according to claim 1, wherein the transducer (13) has an elastic modulus of less than 50 GPa and/or the transducer (13) is configured to operate as an nλ/4 transducer, where n =1, and wherein a frequency of resonance fₒ is defined by the fixed length of the transducer (13).

4. The cordless ultrasonic dental scaler system (18) according to claim 1, wherein the tip (15) is detachably connected to the distal end of the acoustic transformer (9) by threads.

5. The cordless ultrasonic dental scaler system (18) according to claim 1, wherein the rotatable grip (16) has a rotational range of at least 360 degrees relative to the enclosure (5)

6. The cordless ultrasonic dental scaler system (18) according to claim 5, wherein a torque required to rotate the rotatable grip (16) relative to the enclosure (5) is less than 10 in-ounces (0.0706 Newton-meters) or is in a range of 1 in-ounce (0.0071 Newton-meters) to 5 in-ounces (0.0353 Newton-meters).

7. The cordless ultrasonic dental scaler system (18) according to claim 1, wherein the battery is rechargeable.

8. The cordless ultrasonic dental scaler system (18) according to claim 1, wherein the electronic control system (26) and the battery are detachably removable from the enclosure (5).

9. The cordless ultrasonic dental scaler system (18) according to claim 1, wherein a first portion of the enclosure (5) housing the electronic control system (26) and the battery is detachable from a second portion of the enclosure (5).

10. The cordless ultrasonic dental scaler system (18) according to claim 1, wherein the fluid source (21) is a removable pod which encloses the fluid.

11. The cordless ultrasonic dental scaler system (18) according to claim 1, wherein the fluid includes at least one of a sterile fluid or a medicament.

12. The cordless ultrasonic dental scaler system (18) according to claim 1, wherein the proportionality of the metered flow rate of the fluid from the fluid source (21) to the output amplitude of the vibrational wave produced by the acoustic assembly (2) is linear or non-linear.

13. The cordless ultrasonic dental scaler system (18) according to claim 1, wherein a substantially uniform pressure is applied to the fluid contained within the fluid source (21).

14. The cordless ultrasonic dental scaler system (18) according to claim 1, wherein a pressure applied to the fluid contained within the fluid source (21) is in a range of 2 psi (13789.5 Pa) to 10 psi (68947.6 Pa) or in a range of 3 psi (20684.3 Pa) to 5 psi (34473.8 Pa).

15. The cordless ultrasonic dental scaler system (18) according to claim 1, further comprising a spring disposed within the enclosure (5), the spring configured to apply a pressure to the fluid contained within the fluid source (21).

## Patentansprüche

1. Kabelloses dentales Ultraschall-Scalersystem (18), wobei das System Folgendes umfasst:
ein Gehäuse (5), dazu ausgelegt, in der Hand gehalten zu werden;
eine Ultraschall-Akustik-Anordnung (2), welche zumindest teilweise innerhalb des Gehäuses (5) angeordnet ist, wobei die Ultraschall-Akustik-Anordnung (2) dazu ausgelegt ist, eine Schwingungswelle zu erzeugen, und Folgendes umfasst:
einen Wandler (13), welcher eine festgelegte, zwischen einem ersten und zweiten Ende des Wandlers (13) verlaufende Länge definiert;
einen akustischen Transformator (9), welcher mit dem Wandler (13) an einer Verbindungsstelle verbunden ist und ausgehend von dieser verläuft; und
eine Spitze (15), welche abnehmbar mit einem distalen Ende des akustischen Transformators (9) verbunden ist;
ein elektronisches Steuersystem (26), welches innerhalb des Gehäuses (5) angeordnet und dazu ausgelegt ist, der Ultraschall-Akustik-Anordnung (2) Energie zuzuführen;
eine Batterie (30), welche innerhalb des Gehäuses (5) angeordnet und dazu ausgelegt ist, das elektronische Steuersystem (26) anzutreiben; und
eine Fluidquelle (21), welche innerhalb des Gehäuses (5) angeordnet ist, wobei die Fluidquelle (21) ein Fluid enthält und eine Durchflussrate des Fluids von der Fluidquelle (21) aufweist, wobei die Durchflussrate durch das elektronische Steuersystem (26) gesteuert wird, **dadurch gekennzeichnet, dass** das kabellose dentale Ultraschall-Scalersystem (18) einen schwenkbaren Griff (16) umfasst, welcher an den akustischen Transformator (9) an einem Knotenbereich des akustischen Transformators (9) gekoppelt ist, wobei der schwenkbare Griff (16) dazu ausgelegt ist, die Ultraschall-Akustik-Anordnung (2) relativ zu dem Gehäuse (5) zu schwenken, und dass die Durchflussrate des Fluids von der Fluidquelle (21) proportional zu einer Ausgangsamplitude der von der Ultraschall-Akustik-Anordnung (2) erzeugten Schwingungswelle ist.

2. Kabelloses dentales Ultraschall-Scalersystem (18) nach Anspruch 1, wobei der Wandler (13) ein Terfenol-D-Wandler ist.

3. Kabelloses dentales Ultraschall-Scalersystem (18) nach Anspruch 1, wobei der Wandler (13) einen Elastizitätsmodul von weniger 50 GPa aufweist und/oder der Wandler (13) dazu ausgelegt ist, als nλ/4 Wandler zu arbeiten, wobei n =1 und wobei eine Resonanzfrequenz fₒ durch die festgelegte Länge des Wandlers (13) definiert ist.

4. Kabelloses dentales Ultraschall-Scalersystem (18) nach Anspruch 1, wobei die Spitze (15) abnehmbar mit dem distalen Ende des akustischen Transformators (9) durch Gewinde verbunden ist.

5. Kabelloses dentales Ultraschall-Scalersystem (18) nach Anspruch 1, wobei der schwenkbare Griff (16) einen Schwenkbereich von mindestens 360 Grad relativ zu dem Gehäuse (5) aufweist.

6. Kabelloses dentales Ultraschall-Scalersystem (18) nach Anspruch 5, wobei ein zum Schwenken des schwenkbaren Griffs (16) relativ zu dem Gehäuse (5) erforderliches Drehmoment weniger als 10 Zoll-Unzen (0,0706 Newtonmeter) beträgt oder in einem Bereich von 1 Zoll-Unze (0,0071 Newtonmeter) bis 5 Zoll-Unzen (0,0353 Newtonmeter) liegt.

7. Kabelloses dentales Ultraschall-Scalersystem (18) nach Anspruch 1, wobei die Batterie wiederaufladbar ist.

8. Kabelloses dentales Ultraschall-Scalersystem (18) nach Anspruch 1, wobei das elektronische Steuersystem (26) und die Batterie abnehmbar aus dem Gehäuse (5) entfernbar sind.

9. Kabelloses dentales Ultraschall-Scalersystem (18) nach Anspruch 1, wobei ein erster Abschnitt des Gehäuses (5), welcher das elektronische Steuersystem (26) und die Batterie aufnimmt, von einem zweiten Abschnitt des Gehäuses (5) abnehmbar ist.

10. Kabelloses dentales Ultraschall-Scalersystem (18) nach Anspruch 1, wobei die Fluidquelle (21) ein entfernbarer Behälter ist, welcher das Fluid enthält.

11. Kabelloses dentales Ultraschall-Scalersystem (18) nach Anspruch 1, wobei das Fluid ein steriles Fluid und/oder ein Medikament umfasst.

12. Kabelloses dentales Ultraschall-Scalersystem (18) nach Anspruch 1, wobei die Proportionalität der Durchflussrate des Fluids von der Fluidquelle (21) zu der Ausgangsamplitude der von der Ultraschall-Akustik-Anordnung (2) erzeugten Schwingungswelle linear oder nichtlinear ist.

13. Kabelloses dentales Ultraschall-Scalersystem (18) nach Anspruch 1, wobei ein im Wesentlichen gleichmäßiger Druck auf das innerhalb der Fluidquelle (21) enthaltene Fluid ausgeübt wird.

14. Kabelloses dentales Ultraschall-Scalersystem (18) nach Anspruch 1, wobei ein auf das innerhalb der Fluidquelle (21) enthaltene Fluid ausgeübter Druck in einem Bereich von 2 psi (13789,5 Pa) bis 10 psi (68947,6 Pa) oder in einem Bereich von 3 psi (20684,3 Pa) bis 5 psi (34473,8 Pa) liegt.

15. Kabelloses dentales Ultraschall-Scalersystem (18) nach Anspruch 1, ferner umfassend eine innerhalb des Gehäuses (5) angeordnete Feder, wobei die Feder dazu ausgelegt ist, einen Druck aus das innerhalb der Fluidquelle (21) enthaltene Fluid auszuüben.

## Revendications

1. Système de détartrage dentaire ultrasonore sans fil (18), le système comprenant :
une enceinte (5) configurée pour être portative ;
un ensemble acoustique ultrasonore (2) disposé au moins partiellement à l'intérieur de l'enceinte (5), l'ensemble acoustique ultrasonore (2) étant configuré pour produire une onde vibratoire et comportant :
un transducteur (13) définissant une longueur fixe s'étendant entre des première et seconde extrémités du transducteur (13) ;
un transformateur acoustique (9) connecté au transducteur (13) au niveau d'une jonction et s'étendant à partir de celui-ci ; et
une pointe (15) connectée de manière amovible à une extrémité distale du transformateur acoustique (9) ;
un système de commande électronique (26) disposé à l'intérieur de l'enceinte (5) et configuré pour exciter l'ensemble acoustique ultrasonore (2) ;
une batterie (30) disposée à l'intérieur de l'enceinte (5) et configurée pour alimenter le système de commande électronique (26) ; et
une source de fluide (21) disposée à l'intérieur de l'enceinte (5), la source de fluide (21) contenant un fluide et ayant un débit mesuré du fluide provenant de la source de fluide (21), le débit mesuré étant commandé par le système de commande électronique (26), **caractérisé en ce que** le système de détartrage dentaire ultrasonore sans fil (18) comprend une poignée rotative (16) accouplée au transformateur acoustique (9) au niveau d'une zone nodale du transformateur acoustique (9), la poignée rotative (16) étant configuré pour faire tourner l'ensemble acoustique ultrasonore (2) par rapport à l'enceinte (5) et **en ce que** le débit mesuré du fluide provenant de la source de fluide (21) est proportionnel à une amplitude de sortie de l'onde vibratoire produite par l'ensemble acoustique ultrasonore (2).

2. Système de détartrage dentaire ultrasonore sans fil (18) selon la revendication 1, dans lequel le transducteur (13) est un transducteur en Terfenol-D.

3. Système de détartrage dentaire ultrasonore sans fil (18) selon la revendication 1, dans lequel le transducteur (13) a un module d'élasticité inférieur à 50 GPa et/ou le transducteur (13) est configuré pour fonctionner en tant que transducteur ηλ/4, où n = 1, et dans lequel une fréquence de résonance fₒ est définie par la longueur fixe du transducteur (13).

4. Système de détartrage dentaire ultrasonore sans fil (18) selon la revendication 1, dans lequel la pointe (15) est reliée de manière détachable à l'extrémité distale du transformateur acoustique (9) par des fils.

5. Système de détartrage dentaire ultrasonore sans fil (18) selon la revendication 1, dans lequel la poignée rotative (16) a une plage de rotation d'au moins 360 degrés par rapport à l'enceinte (5).

6. Système de détartrage dentaire ultrasonore sans fil (18) selon la revendication 5, dans lequel un couple requis pour faire tourner la poignée rotative (16) par rapport à l'enceinte (5) est inférieur à 10 po-onces (0,0706 newton mètre) ou est dans la plage de 1 po-once (0,0071 newton mètre) à 5 po-onces (0,0353 newton mètre).

7. Système de détartrage dentaire ultrasonore sans fil (18) selon la revendication 1, dans lequel la batterie est rechargeable.

8. Système de détartrage dentaire ultrasonore sans fil (18) selon la revendication 1, dans lequel le système de commande électronique (26) et la batterie sont amovibles de manière détachable de l'enceinte (5).

9. Système de détartrage dentaire ultrasonore sans fil (18) selon la revendication 1, dans lequel une première partie de l'enceinte (5) logeant le système de commande électronique (26) et la batterie est détachable d'une seconde partie de l'enceinte (5).

10. Système de détartrage dentaire ultrasonore sans fil (18) selon la revendication 1, dans lequel la source de fluide (21) est une capsule amovible qui enferme le fluide.

11. Système de détartrage dentaire ultrasonore sans fil (18) selon la revendication 1, dans lequel le fluide comporte un fluide stérile et/ou un médicament.

12. Système de détartrage dentaire ultrasonore sans fil (18) selon la revendication 1, dans lequel la proportionnalité entre le débit mesuré du fluide provenant de la source de fluide (21) et l'amplitude de sortie de l'onde vibratoire produite par l'ensemble acoustique (2) est linéaire ou non linéaire.

13. Système de détartrage dentaire ultrasonore sans fil (18) selon la revendication 1, dans lequel une pression sensiblement uniforme est appliquée au fluide contenu dans la source de fluide (21).

14. Système de détartrage dentaire ultrasonore sans fil (18) selon la revendication 1, dans lequel une pression appliquée au fluide contenu dans la source de fluide (21) est dans la plage de 2 psi (13 789,5 Pa) à 10 psi (68 947,6 Pa) ou dans la plage de 3 psi (20 684,3 Pa) à 5 psi (34 473,8 Pa).

15. Système de détartrage dentaire ultrasonore sans fil (18) selon la revendication 1, comprenant en outre un ressort disposé à l'intérieur de l'enceinte (5), le ressort étant configuré pour appliquer une pression au fluide contenu à l'intérieur de la source de fluide (21).
